# EUROPEAN PATENT SPECIFICATION

(11) **EP 3 038 295 B1**
(45) Date of publication and mention of the grant of the patent: **01.05.2024**
(21) Application number: 14200325.0
(22) Date of filing: 24.12.2014
(51) Int. Cl.: H04L 12/40, H04L 9/40

(54) **Method and device for communicating control information**
Verfahren und Vorrichtung zur Übermittlung von Steuerinformationen
Procédé et dispositif pour communiquer des informations de commande

(43) Date of publication of application: 29.06.2016
(73) Proprietor: Televic Rail NV, 8870 Izegem (BE)
(72) Inventor: Claeys, Luc, 8870 Izegem (BE); Boerjan, Kristof, 8870 Izegem (BE); Gesquiere, John, 8870 Izegem (BE); Yonatani, Limor, 8870 Izegem (BE); Vercoutter, Bart, 8870 Izegem (BE)
(74) Representative: Winger

(56) References cited:
- WO-A1-99/26395
- US-A1- 2012 106 551

## Description

### Field of the invention

The present invention is generally related to the field of distributed voice communication systems provided with public address and intercom functionalities. More in particular, the invention is related to the communication of control information over such systems.

### Background of the invention

To perform public address and intercom functionalities distributed voice communication systems are often installed, for example in a multiple-vehicle environment like a train. In each car/vehicle of a train peripheral devices are installed to interface with the passenger, such as amplifiers, intercom panels....

Following the UIC568 norm, public address and intercom are controlled and signals are distributed over different train lines: analogue signal lines and logic control lines. Train lines are communication lines distributed over the entire train and accessible by the equipment installed in the different cars. When coupling trains logic/controls statuses are distributed instantly.

In a lot of cases different public address and intercom functions today are distributed over an Internet Protocol (IP) system each having their priority and using their required resources (e.g. amplifiers, loudspeakers,...). These devices are simple non-functional devices which convert the different IP streams to analogue or functional signalling. The control is either distributed or handled by one main control device (or redundant control device). A certain amount of time is required to set up communication addresses and to route the different functional and audio streams.

To manage (i.e. to set up, maintain and stop) an audio link in a digital communication network, control data and digital audio streaming is required. The control data is used for link management and functional management.

Various link management approaches can be envisaged (e.g. VoIP session control). They are extensively described in the technical literature. Often a main controller is used to manage the link. An obvious drawback of such a solution is that when something goes wrong, the link is interrupted.

Data exchange of control data between two or multiple processes can be performed in many different ways. One option is to employ the voice communication system. In case audio streaming is used for the purpose of safety communication, very high requirements have to be met for all parts of the equipment by providing redundancy etc.

In WO99/26395 a solution is proposed to do call routing whereby determination for routing calls is sharable with decentralized routers in the field. Determination of final routing can be made as close as possible to the final destination and information related to routing can be maintained in a close to real time way. To achieve this available in-band data fields are adapted to carry routing information associated with a telephone call for purposes of routing calls and negotiating routing with routers located at various levels in the network. US2012/106551 also discloses a relevant document in the art.

Consequently, there is a need for a solution wherein critical control data communicated via a voice communication system is so protected that their safe distribution over the system is guaranteed.

### Summary of the invention

It is an object of embodiments of the present invention to provide for a method for communication via a voice communication system whereby it can be guaranteed that information related to e.g. safety functions is distributed in a failure-safe way.

The above objective is accomplished by the solution according to the present invention.

In a first aspect the invention relates to a method for communicating, via a voice communication system operable over a digital communication network, control information related to a component of the voice communication system, according to claim 1.

The proposed solution indeed allows for failure-safe communication of certain information, namely control information related to a component of the voice communication system.

In a minimal set-up this control information contains at least routing information, i.e. information which at least defines the destination and the priority of the communication. The control information is transmitted in a dedicated data field of the audio data packets. Once the audio data packets are received, the control data are analysed and the necessary actions are taken based on the control data present in the dedicated data field. Preferred embodiments of the method of the invention are included in the dependent claims 2 to 7.

In a preferred embodiment the data field comprises a functional priority indication. Advantageously, the functional priority indication is also indicative of a safety integrity level.

In a preferred embodiment the indication in the data field comprises a network priority.

In one embodiment the control information comprises an authentication key.

In a preferred embodiment of the method of the invention a Voice-over-Internet Protocol is applied for communicating.

The invention also relates to a voice communication system comprising a device for transmission or reception according to claim 8. Preferred embodiments of the system are included in the dependent claims 9 to 12.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates an audio source and destination connected via a network.
Fig.2 illustrates a data packet and its content.
Fig.3 illustrates a 'one to many' communication scheme.
Fig.4 illustrates a 'many to one' communication scheme.
Fig.5 illustrates an exemplary application using an Ethernet network.
Fig.6 illustrates the combined usage of the voice communication system.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention discloses a solution wherein the audio function is handled in a direct way between a source and destination(s) in a voice communication system without adding intermediate decision blocks or without using interactive session control. A higher level of functional redundancy/availability is obtained by reducing the detrimental effect of intermediate decision blocks (more possible points of failure).

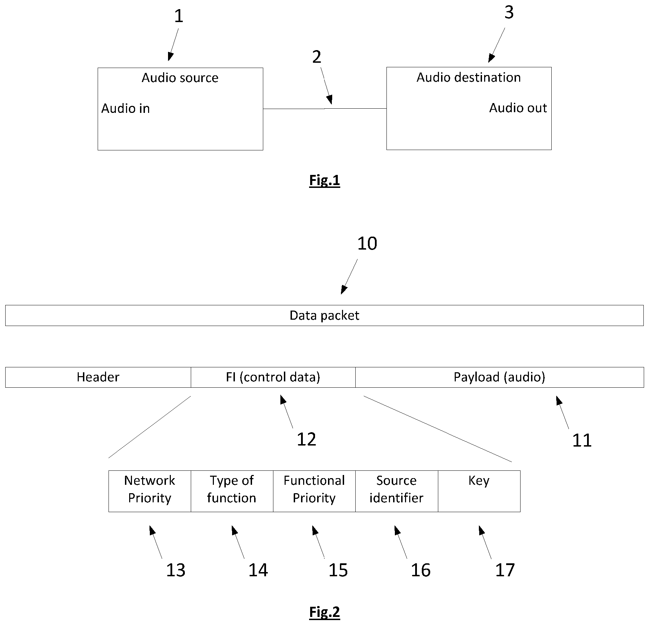

At the source device (1) the audio is conditioned by the preamplifier and sampled by a digitizer (see Fig.1). Digital samples are combined in streams and distributed on the network (2) to one or more destinations (3). The digital audio streaming content, which is part of the payload (11) in Fig.2, is encapsulated into a data packet (10) combined with control data containing at last some routing information. The control data is comprised in the Function Indicator (FI) (12) block of the data packet. Due to the fact that audio streaming is periodic and by adding control data in said stream, a combination is created of audio streaming data and so-called 'cyclic process data'. In this description cyclic process data is interpreted as the status of process variables, which are periodically refreshed and exchanged.

In the destination device the FI block is analysed. The control data contains the necessary information allowing the destination to route the digital stream to the correct output resource in line with the functional priority. The digital audio content routed to an output is converted to analogue information, amplified and broadcasted to the user.

For each function using the proposed direct control, the source and the destinations are pre-programmed to act in conformity with the required functionality. The approach can be used in any combination with other types of session control.

In a typical use case this methodology is applied for a few functions only. However, the method of the invention is not limited thereto. As stated, any function can be implemented following the described approach, but this would imply that on the source as well as on the destination side the complexity of direct functional routing increases. Therefore the methodology is preferably only used for functions requiring a high availability, like safety functions or functions requiring an instant action, for instance emergency intercom addressing all loudspeakers.

An authentication key can be added to the FI to increase the communication security.

If a safety function is triggered, the samples of the dedicated input resources at the source are put in the payload and immediately combined with the content of the predefined FI block, optionally including calculation of the authentication key. Next they are transmitted over the network.

At the destination the FI is first examined. If a valid FI (including the authentication check) is recognized with respect to the given priority in the Fl, all ongoing function(s) using the safety required resource(s) are stopped and the audio content of the safety source, which is comprised in the payload, is immediately routed to the dedicated output resource.

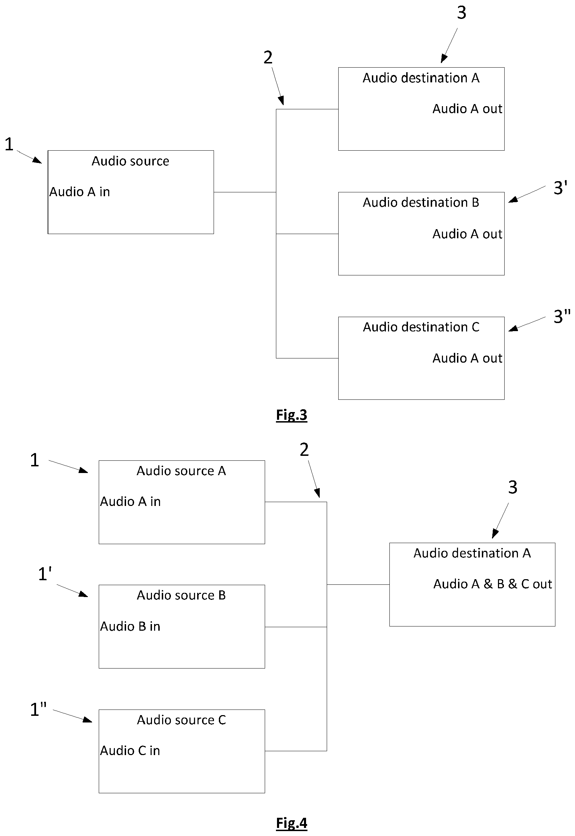

If the stream is distributed in a multicast or broadcast mode, each device in the multicast or broadcast domain receives this message. Each device is adapted for interpreting the control data in the stream and for reacting accordingly. For instance, for public address a broadcast of the communication over the digital network allows multiple destinations to handle the streams in a similar way, as illustrated in Fig.3.

The control data is cyclically distributed and contains all information to allow a destination to handle correctly the functionality (e.g. ensuring some safety function), without additional communication with the source. This means that the functionality is accomplished at any moment the destination is detecting the stream. When, e.g., additional destinations are coupled and a direct functionality as described is ongoing, the destination can instantly act.

In a train system multiple vehicles are coupled and decoupled during their operation. Each vehicle comprises a part of the digital network and holds at least one source device or destination device. The digital communication network with the various connected devices needs to be reconfigured after a change in the network has occurred due to coupling or decoupling of vehicles. The direct communication method of this invention allows the receiving devices to continue or start a communication, while the device is not reconfigured. The communication method does not make use of the configuration parameters, while the FI contains all necessary routing information for the communication which is defined for the voice communication system.

The following control content is added in the FI of a streaming packet:
- Network priority (13)
- Type of function (14)
- Functional priority (15)
- Source identifier (16)
- Key (17)

Different functions within the voice communication system can be intended for a same destination. Therefore each function needs to be assigned a priority level in the voice communication system. The functional priority in the FI indicates the priority of the function and gives at the same time an indication of the safety integrity level of the function. At a destination where communication related to different functions arrives, priority is given to the communication with the highest priority level.

The network priority indicates the priority of the data over the network and can be used to set the Quality-of-Service over the network. The implementation of the network priority indication depends on the topology of the network : for an IP network the priority bits in the VLAN byte or the precedence bits in the Type-of-Service (ToS) byte can be used. These two types of fields in the IP header can define the priority of handling packets within a network. Packets with the lowest network priority will be dropped first in case of network congestion.

In a voice communication system there are different types of function, e.g. global public address or communication between staff or communication between staff and other people. The type of function field indicates which type of function the accompanying payload belongs to.

The source identifier is an indication of which type of source is used, e.g. an operator desk at reception. In case a multitude of sources of the same type are present, the type of source indication comprises a unique identifier over the complete type of source in the system.

To prevent that unauthorized sources distribute uncontrolled streaming data, an encrypted authentication key is added. The key is generated including the above described variables (type of function, priority, source identifier) in order to control the integrity of said data. In addition (for instance) a time stamp may be added to increase the level of authentication. The other additional data (type of function, priority, source identifier) is typically, and preferably, not encrypted, so that, if required, network devices can read the information to allow/set for instance QoS parameters.

The actual implementation of the control content depends on the transmission media used for the voice communication system. For example, in case of a Control Area Network (CAN) it is not possible to process the FI in the header. Consequently, the FI must be part of the field provided for the payload. In the case of RTP communication where certain fields in the header remain unused, e.g. because the communication takes place in a closed system, the FI information can be put in the RTP header. Hence, in the first example the FI is treated in the payload and in the second case the FI is in the data packet header.

The functions can be grouped in different types of communication schemes. The different schemes comprise 1) one user to many users, 2) one user to another user, 3) many users to one user. According to these different types of communication scheme some specific actions need to be covered.

In a 'one to many' communication scheme (Fig.3) the audio of a certain function is communicated from a source device to multiple destination devices. The audio stream with the FI is broadcasted over the digital communication network. All destination devices receive this stream and analyze the Fl. All destination devices which are defined to output the specific function and which do not have a higher priority function active, output the audio stream to the user of the voice communication system. This 'one to many' communication scheme is typically used for announcements.

With a 'one to one' scheme communication is set up between two users. Typical to this scheme is the acknowledgement by the user of the communication. The audio source broadcasts the audio stream on the digital network upon activation of the function. At the destination device the FI is analyzed. When the function is defined in the destination device, an indication is given to the user at that device. The user may accept the communication, at that time the source identifier of the received stream is stored and used during the further communication to maintain communication with the stream of the same source identifier. The 'one to one' communication scheme is typically used for intercom.

With a 'many to one' communication scheme (Fig.4), the different audio streams from the different audio sources (1, 1', 1") with the same function active need to be mixed at the destination side (3). If no limitation is set on the number of streams, the communication will be become unintelligible with too many speakers at the same time. The number of streams must therefore be limited to maintain intelligibility. The number of streams (denoted K) is preferably fixed in the system.

In a 'many to one' conversation each audio source should make sure not to exceed the allowed number K of participants in the conversation. If the number of streams is lower than K-1, the audio source can join conversation. However, if the number is equal to or higher than K, the audio source must remain in a wait state.

If two audio sources start a communication of type 'many to one' at the same time, both are accepted. For robustness the destination of this 'many to one' communication must be foreseen to be able to handle K+1 streams. The probability of three persons starting a conversation at the same time is considered negligible.

It may be that when an audio source wants to join the communication, the destination address of the 'many to one' communication needs to be notified, but that this cannot be done due to the limitation of the allowed sources. For that purpose all waiting units must still send packets at a very low rate - one out of N packets will be sent. The destination keeps a track of the new requests and gives a notification for each new audio source that wants to participate. The bandwidth BW of those new requests is very low and therefore will not reduce the overall BW.

In the following example the Function Indicator is given in case of RTP streaming. The insertion of the Function Indicator in the data packet is explained.

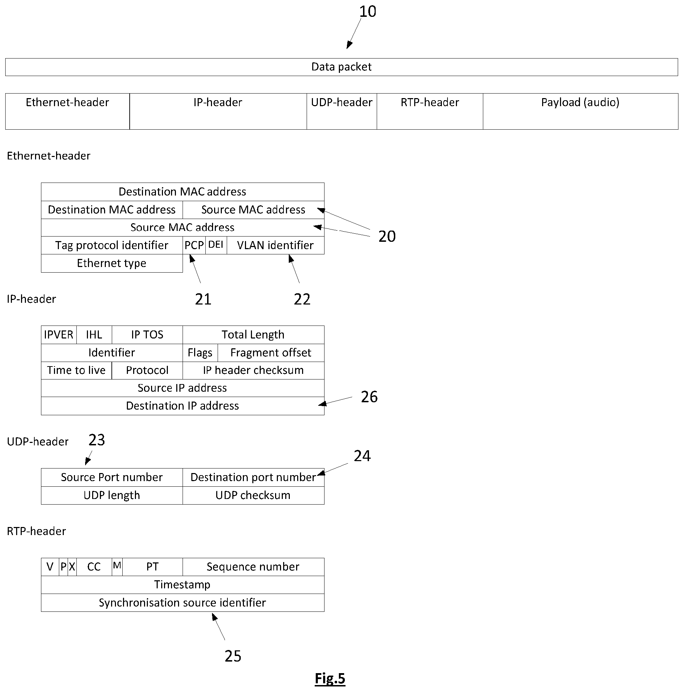

In case the voice communication system uses an Ethernet network in a closed system, the information necessary for the Function Indicator can be obtained from the RTP header and accompanying UPD and IP header. In this particular embodiment the function indicator is implemented as follows. The Ethernet data packet is shown in Fig.5. The packet header comprises an Ethernet header, IP header, UDP header and RTP header. This is a standard Ethernet package which makes that the communication is supported by all commercial available Ethernet-switches.

The requirements for the Function Indicator are mapped on the data present in the Ethernet packet headers in this example. The VLAN identifier (22) is used to create a separate Local Area Network, which exists next to the other data communication present in the system. The PCP (Priority Code Point) (21) is used to set priority in the Ethernet-network in accordance with the network priority requirement of the FI. The Destination port number (24) is used to indicate the type of function and the functional priority of the FI. Distinction between safety communication and other communication (which depends on session controls) is made by these predefined port numbers.

The source identifier from the FI is defined by the source port number (23) and the source MAC address (20). The source port number is used as indication for the type of source and the source MAC address is used as unique numbering for a device of a certain type. During system manufacturing care is taken that from the different devices of each type a unique MAC-address is allocated to each device.

The synchronisation source identifier (25) contains the key for the FI.

By using a multi-cast or broadcast defined by the destination IP address (26) all devices within the VLAN receive the data-stream from a certain source and thereby the voice communication system can work independently from any IP address allocation (fixed or reconfigurable).

This direct signalling offers the advantage that no session protocol is required for the communication. In the current state of the art the control data for this session protocol is typically implemented by RTCP (RTP Control Protocol).

Another advantage of this way of data communication is at the time a network is reconfigured (e.g., by adding devices), the destination devices immediately receive the necessary communication without time being needed for reconfiguring the network parameters.

With the direct signalling over the digital network according to the invention, the existence of a stream indicates the start of a communication.

In the destination devices a buffer is implemented which takes in the received packets. The buffer is used to overcome the jitter in the network. When the stream is stopped by the source, no data packets arrive anymore at the destination for this stream. The buffer for this stream gets empty at the destination, which is the indication for terminating a communication to the destination device.

The function indicator can also be used to indicate the system status to the user. The active function is transmitted with the audio stream. This active function can be translated to an indicator which will be set ON to indicate the active function to the user.

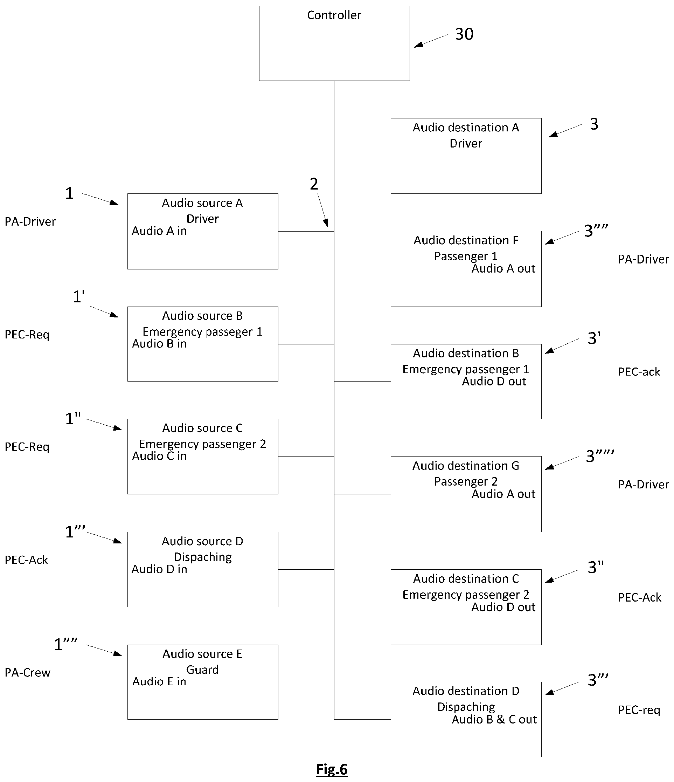

Fig.6 gives an example of a voice communication system configuration in a train. The voice communication system in a passenger train has different types of users each with dedicated source and/or destination devices. The different devices are assigned to different users on the train. The driver has the responsibility to maintain safe operation of the train and needs to communicate to dispatching, members of the personnel (e.g. train guards), passengers in an emergency situation or all passengers. The driver interface [1 & 3] of the train voice communication system is adapted for at least these types of communications. There is typically one active driver interface in the train.

The dispatching needs to provide information from off-board the train to the train and, hence, to communicate to the driver, train guards, passengers in emergency situations or all passengers. The dispatching interface [1‴ & 3‴] is adapted to support at least these communication functions. There can be multiple dispatching interfaces on a train. The dispatching interface connects typically to a radio on-board the train which makes wireless connection to the dispatching centre.

One or more train guards need to communicate to the driver, the dispatching or all passengers. The guard interface [1"" & 3""] is adapted to support at least these communications. There can be multiple guard interfaces in a train.

A passenger in an emergency situation needs to communicate to the train personnel or the dispatching. The emergency passenger interface [1' & 1" & 3' & 3"] is adapted to support these communications. There are multiple emergency passenger interfaces within the train.

The passengers can only receive communication and, hence, only have an audio destination device available, the passenger interface [3"" & 3""']. There are multiple passenger interfaces available in the train, at least one in each car of the train.

In this example it is defined that the driver has priority and that the communication from the guard is no safety function. For the latter a controller (30) is present to handle communication in accordance with current state of the art communication protocols. When no direct communication is present, the source and destination devices can perform communication by means of a session control principle.

In the example it is shown that at the same time multiple communications can be active between different users. The driver performs an announcement to the passengers, which is a 'one to many' communication. Two passengers in emergency perform an emergency request ('many to one' communication), which are acknowledged by the dispatching ('one to many' communication). The guard is requested to make an announcement to the passengers, but because the passenger interface resources are already occupied with direct communication from the driver, the guard communication is set on hold until the driver announcement has been made.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for communicating via a voice communication system in a multiple-vehicle public transportation means operable over a digital communication network (2), wherein each vehicle comprises a part of said digital communication network and one or more destination devices, control information to be analysed in said one or more destination devices of said voice communication system, said control information at least comprising a type of function indication indicating whether voice communication is
- a public address via a one-to-many scheme for communication to passengers on said multiple-vehicle public transportation means,
- a communication between two users via a one-to-one scheme or
- occurs via a many-to-one scheme wherein at least two different audio streams need to be mixed in one destination device of said one or more destination devices,
the method comprising the steps of
- distributing to said one or more destination devices (3) a stream of audio data packets (10) over said digital communication network, at least one of said audio data packets comprising a header, payload data (11) and a control data field (12) comprising said control information comprising said indication of the type of function of said payload data,
- receiving at said one or more destination devices said stream of audio data packets with at least one of said audio data packets comprising said header, said payload data and said control data field,
- analysing in said one or more destination devices said control information,
- said one or more destination devices outputting said stream of audio data packets to an output resource of the respective destination device based on said analysed control information.

2. Method for communicating as in claim 1, wherein said control data field comprises a functional priority indication.

3. Method for communicating as in claim 2, wherein said functional priority indication is also indicative of a safety integrity level.

4. Method for communicating as in any of claims 1 to 3, wherein said control data field comprises a network priority.

5. Method for communicating as in any of the previous claims, wherein said control information comprises an authentication key.

6. Method for communicating as in any of the previous claims, wherein said voice communication via said one-to-one scheme is communication via intercom.

7. Method for communicating as in any of the previous claims, wherein a Voice-over-Internet Protocol is applied.

8. Voice communication system for use in a multiple-vehicle public transportation means comprising
- at least one source device (1)
- one or more destination devices (3) in each vehicle
- a digital communication network (2) for establishing communication between said at least one source device and said one or more destination devices, each vehicle comprising a part of said digital communication network,
wherein said source device is arranged to distribute a stream of audio data packets (10) over said digital communication network, at least one of said audio data packets comprising a header, payload data (11) and a control data field (12) comprising control information comprising an indication of the type of function of said payload data, said indication indicating whether voice communication is
- a public address via a one-to-many scheme for communication to passengers on said multiple-vehicle public transportation means,
- a communication between two users via a one-to-one scheme or
- occurs via a many-to-one scheme wherein at least two different audio streams need to be mixed in a destination device of said one or more destination devices, and
wherein said one or more destination devices are arranged to receive said stream of audio data packets, to analyse said control information and to output said stream of audio data packets to an output resource of the respective destination device based on said analysed control information.

9. Voice communication system as in claim 8, wherein said control data field comprises one or more of a functional priority indication, a network priority, an authentication key.

10. Voice communication system as in claim 8 or 9, arranged for performing voice communication via said one-to-one scheme as intercom communication.

11. Voice communication system as in any of claims 8 to 10, arranged for applying a Voice-over-Internet Protocol.

12. Voice communication system as in any of claims 8 to 11, wherein said source device is arranged to distribute said stream of audio data packets in a broadcast mode.

## Patentansprüche

1. Kommunikationsverfahren über ein Sprachkommunikationssystem in einem öffentlichen Verkehrsmittel mit mehreren Fahrzeugen, das über ein digitales Kommunikationsnetzwerk (2) betrieben werden kann, wobei jedes Fahrzeug einen Teil des digitalen Kommunikationsnetzwerks und eine oder mehrere Zielvorrichtungen umfasst, wobei Steuerinformationen in der einen oder den mehreren Zielvorrichtungen des Sprachkommunikationssystems zu analysieren sind, wobei die Steuerinformationen zumindest einen Funktionstyp umfassen, der angibt, ob es sich bei der Sprachkommunikation um
- eine öffentliche Ansprache über ein Eins-zu-Vielen-Schema zur Kommunikation mit Fahrgästen auf dem öffentlichen Verkehrsmittel mit mehreren Fahrzeugen handelt,
- eine Kommunikation zwischen zwei Benutzern über ein Eins-zu-Eins-Schema handelt oder
- ob sie über ein Viele-zu-Eins-Schema erfolgt, wobei mindestens zwei verschiedene Audioströme in einer Zielvorrichtung der einen oder mehreren Zielvorrichtungen gemischt werden müssen,
wobei das Verfahren die folgenden Schritte umfasst
- Verteilen eines Stroms von Audiodatenpaketen (10) über das digitale Kommunikationsnetzwerk an die eine oder mehrere Kommunikationsvorrichtungen (3), wobei mindestens eines der Audiodatenpakete einen Header, Nutzdaten (11) und ein Steuerdatenfeld (12) umfasst, das die Steuerinformationen enthält, die die Angabe des Funktionstyps der Nutzdaten umfassen,
- Empfangen des Stroms von Audiodatenpaketen an der einen oder den mehreren Zielvorrichtungen, wobei mindestens eines der Audiodatenpakete den Header, die Nutzdaten und das Steuerdatenfeld umfasst,
- Analyse der Steuerinformationen in der einen oder den mehreren Zielvorrichtungen,
- wobei die eine oder die mehreren Zielvorrichtungen den Strom von Audiodatenpaketen an eine Ausgangsressource der jeweiligen Zielvorrichtung auf der Grundlage der analysierten Steuerinformationen ausgeben.

2. Kommunikationsverfahren nach Anspruch 1, wobei das Steuerdatenfeld eine funktionale Prioritätsangabe umfasst.

3. Kommunikationsverfahren nach Anspruch 2, wobei die funktionale Prioritätsangabeauch auch eine Sicherheitsintegritätsstufe anzeigt.

4. Kommunikationsverfahren nach einem der Ansprüche 1 bis 3, wobei das Steuerdatenfeld eine Netzwerk-Priorität umfasst.

5. Kommunikationsverfahren nach einem der vorstehenden Ansprüche, wobei die Steuerinformationen einen Authentifizierungsschlüssel umfassen.

6. Kommunikationsverfahren nach einem der vorstehenden Ansprüche, wobei die Sprachkommunikation über das Eins-zu-Eins-Schema eine Kommunikation über eine Gegensprechanlage ist.

7. Kommunikationsverfahren nach einem der vorstehenden Ansprüche, wobei ein Voice-over-Internet-Protokoll verwendet wird.

8. Sprachkommunikationssystem zur Verwendung in einem öffentlichen Verkehrsmittel mit mehreren Fahrzeugen, umfassend
- mindestens eine Quellvorrichtung (1)
- eine oder mehrere Zielvorrichtungen (3) in jedem Fahrzeug
- ein digitales Kommunikationsnetzwerk (2) zum Aufbau der Kommunikation zwischen der mindestens einen Quellvorrichtung und der einen oder mehreren Zielvorrichtungen, wobei jedes Fahrzeug einen Teil des digitalen Kommunikationsnetzwerks umfasst,
wobei die Quellvorrichtung so eingerichtet ist, dass sie einen Strom von Audiodatenpaketen (10) über das digitale Kommunikationsnetzwerk verteilt, wobei mindestens eines der Audiodatenpakete einen Header, Nutzdaten (11) und ein Steuerdatenfeld (12) umfasst, das Steuerinformationen enthält, die eine Anzeige des Funktionstyps der Nutzdaten umfassen, wobei die Anzeige angibt, ob es sich bei der Sprachkommunikation um
- eine öffentliche Ansprache über ein Eins-zu-Vielen-Schema zur Kommunikation mit Fahrgästen auf dem öffentlichen Verkehrsmittel mit mehreren Fahrzeugen handelt,
- eine Kommunikation zwischen zwei Benutzern über ein Eins-zu-Eins-Schema handelt oder
- ob sie über ein Viele-zu-Eins-Schema erfolgt, wobei mindestens zwei verschiedene Audioströme in einer Zielvorrichtung der einen oder mehreren Zielvorrichtungen gemischt werden müssen, und
wobei die eine oder die mehreren Zielvorrichtungen so eingerichtet sind, dass sie den Strom von Audiodatenpaketen empfangen, die Steuerinformationen analysieren und den Strom von Audiodatenpaketen an eine Ausgaberessource der jeweiligen Zielvorrichtung auf der Grundlage der analysierten Steuerinformationen ausgeben.

9. Sprachkommunikationssystem nach Anspruch 8, wobei das Steuerdatenfeld eines oder mehrere von einer funktionalen Prioritätsangabe, einer Netzwerkpriorität und einem Authentifizierungsschlüssel umfasst.

10. Sprachkommunikationssystem nach Anspruch 8 oder 9, das zur Durchführung von Sprachkommunikation über das Eins-zu-Eins-Schema als Gegensprechverbindung eingerichtet ist.

11. Sprachkommunikationssystem nach einem der Ansprüche 8 bis 10, das für die Anwendung eines Voice-over-Internet-Protokolls eingerichtet ist.

12. Sprachkommunikationssystem nach einem der Ansprüche 8 bis 11, wobei die Vorrichtung so eingerichtet ist, dass sie den Strom von Audiodatenpaketen in einem Broadcast-Modus verteilt.

## Revendications

1. Méthode pour communiquer via un système de communication vocale dans un moyen de transport public à véhicules multiples exploitable sur un réseau de communication numérique (2), dans lequel chaque véhicule comprend une partie dudit réseau de communication numérique et un ou plusieurs dispositifs de destination, des informations de contrôle à analyser dans ledit ou lesdits dispositifs de destination dudit système de communication vocale, lesdites informations de contrôle comprenant au moins une indication du type de fonction indiquant si la communication vocale est
- une adresse publique via un schéma un-à-plusieurs pour la communication aux passagers sur ledit moyen de transport public à véhicules multiples,
- une communication entre deux utilisateurs via un schéma un-à-un ou
- se produit via un schéma plusieurs-à-un dans lequel au moins deux flux audio différents doivent être mélangés dans un dispositif de destination dudit ou desdits dispositifs de destination,
la méthode comprenant les étapes de
- distribuer audit ou auxdits dispositifs de destination (3) un flux de paquets de données audio (10) sur ledit réseau de communication numérique, au moins l'un desdits paquets de données audio comprenant un en-tête, des données de charge utile (11) et un champ de données de contrôle (12) comprenant lesdites informations de contrôle comprenant ladite indication du type de fonction desdites données de charge utile,
- recevoir audit ou auxdits dispositifs de destination ledit flux de paquets de données audio avec au moins l'un desdits paquets de données audio comprenant ledit en-tête, lesdites données de charge utile et ledit champ de données de contrôle,
- analyser dans ledit ou lesdits dispositifs de destination lesdites informations de contrôle,
- ledit ou lesdits dispositifs de destination émettant ledit flux de paquets de données audio vers une ressource de sortie du dispositif de destination respectif basée sur lesdites informations de contrôle analysées.

2. Méthode pour communiquer comme dans la revendication 1, dans laquelle ledit champ de données de contrôle comprend une indication de priorité fonctionnelle.

3. Méthode pour communiquer comme dans la revendication 2, dans laquelle ladite indication de priorité fonctionnelle est également indicative d'un niveau d'intégrité de sécurité.

4. Méthode pour communiquer comme dans l'une quelconque des revendications 1 à 3, dans laquelle ledit champ de données de contrôle comprend une priorité réseau.

5. Méthode pour communiquer comme dans l'une quelconque des revendications précédentes, dans laquelle lesdites informations de contrôle comprennent une clé d'authentification.

6. Méthode pour communiquer comme dans l'une quelconque des revendications précédentes, dans laquelle ladite communication vocale via ledit schéma un-à-un est une communication via interphone.

7. Méthode pour communiquer comme dans l'une quelconque des revendications précédentes, dans laquelle un protocole de voix sur Internet est appliqué.

8. Système de communication vocale pour utilisation dans un moyen de transport public à véhicules multiples comprenant
- au moins un dispositif source (1)
- un ou plusieurs dispositifs de destination (3) dans chaque véhicule
- un réseau de communication numérique (2) pour établir la communication entre ledit au moins un dispositif source et ledit ou lesdits dispositifs de destination, chaque véhicule comprenant une partie dudit réseau de communication numérique,
dans lequel ledit dispositif source est agencé pour distribuer un flux de paquets de données audio (10) sur ledit réseau de communication numérique, au moins l'un desdits paquets de données audio comprenant un en-tête, des données de charge utile (11) et un champ de données de contrôle (12) comprenant des informations de contrôle comprenant une indication du type de fonction desdites données de charge utile, ladite indication indiquant si la communication vocale est
- une adresse publique via un schéma un-à-plusieurs pour la communication aux passagers sur ledit moyen de transport public à véhicules multiples,
- une communication entre deux utilisateurs via un schéma un-à-un ou
- se produit via un schéma plusieurs-à-un dans lequel au moins deux flux audio différents doivent être mélangés dans un dispositif de destination dudit ou desdits dispositifs de destination, et
dans lequel ledit ou lesdits dispositifs de destination sont agencés pour recevoir ledit flux de paquets de données audio, pour analyser lesdites informations de contrôle et pour émettre ledit flux de paquets de données audio vers une ressource de sortie du dispositif de destination respectif basée sur lesdites informations de contrôle analysées.

9. Système de communication vocale comme dans la revendication 8, dans lequel ledit champ de données de contrôle comprend une ou plusieurs d'une indication de priorité fonctionnelle, une priorité réseau, une clé d'authentification.

10. Système de communication vocale comme dans la revendication 8 ou 9, agencé pour effectuer la communication vocale via ledit schéma un-à-un comme communication interphone.

11. Système de communication vocale comme dans l'une quelconque des revendications 8 à 10, agencé pour appliquer un protocole de voix sur Internet.

12. Système de communication vocale comme dans l'une quelconque des revendications 8 à 11, dans lequel ledit dispositif source est agencé pour distribuer ledit flux de paquets de données audio en mode de diffusion.
